# EUROPÄISCHE PATENTSCHRIFT

(11) **EP 1 185 030 B1**
(45) Veröffentlichungstag und Bekanntmachung des Hinweises auf die Patenterteilung: **27.04.2005**
(21) Anmeldenummer: 00118877.0
(22) Anmeldetag: 31.08.2000
(51) Int. Cl.: H04L 12/28, G08C 17/02

(54) **Verfahren und System zum Fernsteuern von Haushaltgeräten über das Internet**
Method and system for remote control of household devices over the Internet
Procédé et système de télécommande d'appareils domestiques par internet

(43) Veröffentlichungstag der Anmeldung: 06.03.2002
(73) Patentinhaber: smartbuilding AG, 76135 Karlsruhe (DE)
(72) Erfinder: Schlagenhauf, Karl, Dr., 76228 Karlsruhe (DE); Schmitt, Bernd, 76139 Karlsruhe (DE); Krauss, Edgar, 71566 Althuette (DE)
(74) Vertreter: Turi, Michael, Dipl.-Phys.

(56) Entgegenhaltungen:
- WO-A-00/04427
- WO-A-99/46746
- DE-A- 19 849 195

## Beschreibung

Die Erfindung betrifft ein Fernsteuersystem, sowie ein Verfahren zum Fernsteuern von mindestens einem Gerät über ein vom Gerät geographisch entfernt angeordnetes Kommunikationsendgerät, insbesondere einen Computer oder ein mobiles Telephon.

Grundsätzlich ist es bekannt, Maschinen und Anlagen von örtlich u.U. sehr weit entfernten Stellen aus zu steuern. Ein Beispiel hierfür ist etwa die Steuerung des Stromnetzes eines Energieversorgungsunternehmens. Diese bekannten Systeme arbeiten i.A. mit mehreren fest lokalisierten Rechnern. Nur von diesen aus ist die Steuerung möglich.

Auch ist z.B. bekannt, Live-Bilder über das Internet zu übertragen. Hierzu wird eine Kamera an einen Rechner (PC) angeschlossen, der mit einer geeigneten Software (frame grabber) zur Digitalisierung der aufgenommenen Bilder ausgestattet ist. Wenn der benutzte Rechner über einen Internetzugang verfügt, kann das digitalisierte Bild der Videokamera in einer für einen Web-Server (WWW-Server) erreichbaren Form abgespeichert werden. Dies kann in regelmäßigen Abständen oder aber auch jeweils auf Anfrage durch einen Benutzer geschehen.

Ein Verfahren zum Fernsteuern nach dem Oberbegriff von Anspruch 1 ist z.B. aus WO-A-00 044 27 bekannt. Das bekannte Verfahren ermöglicht einen Fernzugriff auf elektrische Geräte zu deren Überwachung und Steuerung. Hierbei wird ein Internet-basiertes Verfahren/System zur Fernsteuerung vorgeschlagen, bei welchem über das Internet auf ein fernzusteuerndes Gerät zugegriffen wird. Für die Kommunikation zwischen einem zentralen Server ("web server") und einem Steuergerät ("eHub") kommt ein IPbasiertes "eLink"-Protokoll zum Einsatz, welches in Verbindung mit verschiedenen physikalischen Verbindungsmedien, wie Telefonleitung, Stromleitung, etc., verwendet werden kann. Für die Kommunikation über das IP-Protokoll sind den einzelnen Steuergeräten vor Ort jeweils IP-Adressen zugewiesen.

Aus WO-A-99 46746 ist ebenso ein Fernsteuerverfahren und System der eingangs genannten Art bekannt. Auch dieses Verfahren beruht auf der Verwendung eines IP-Protokolls, so daß über das Internet auf ein lokales Haus-LAN, zum Beispiel ein CEBus, zum Ablesen von privaten Strom- oder Wasserzählern zugegriffen werden kann. In jedem Hause ist ein eigenes lokales Gateway vorgesehen, welches die notwendige Protokollumsetzung zwischen dem IP-Protokoll und dem jeweils spezifischen Protokoll des Haus-LAN durchführt. Der Aufbau des bekannten Fernsteuersystems hat zur Folge, daß vor Ort ein relativ aufwendiger Gateway-Server für jedes lokale Hausnetz vorzusehen ist.

Die vorliegende Erfindung zielt darauf ab, ein Verfahren und ein System zum Fernsteuern der eingangs genannten Art im Hinblick auf Sicherheit und/oder Bedienerfreundlichkeit zu verbessern.

Nach einem Aspekt der Erfindung wird ein Verfahren zum Fernsteuern gemäß Anspruch 1 bereitgestellt. Nach einem weiteren Aspekt der Erfindung wird ein Fernsteuersystem gemäß Anspruch 13 bereitgestellt.

Danach schafft die Erfindung ein Verfahren und ein System zum Fernsteuern von einem oder mehreren Geräten, bei welchen: das/die fernsteuerbare(n) Gerät(e) an ein Steuergerät angekoppelt ist/sind; eine Vielzahl von Steuergeräten über ein Intranet und/oder eine Telefonverbindung mit einem zentralen Rechner verbunden ist; der zentrale Rechner anderseits über ein öffentlich zugängliches Netz unter Verwendung eines Internetprotokolls von mindestens einem geographisch entfernten Kommunikationsendgerät zur Durchführung der Fernsteuerung erreichbar ist; der zentrale Rechner mehreren Benutzern mit unterschiedlichen Zugriffsberechtigungen zugeordnet ist; und der zentrale Rechner derart angeordnet und ausgebildet ist, daß er eine Zugriffsberechtigungsprüfung vornimmt und je nach erfolgter Autorisierung den Zugriff des Kommunikationsendgeräts zu einem Steuergerät und/oder zu einer Teilfunktion eines Steuergeräts vermittelt und dabei ein bei der Kommunikation mit dem Kommunikationsendgerät verwendete Übertragungsprotokoll in ein zur Kommunikation mit dem Steuergerät verwendete Übertragungsprotokoll konvertiert.

Klarstellend wird darauf hingewiesen, daß der Begriff "Fernsteuerung" vorliegend auch die Begriffe Fernregeln, Fernkalibrieren, Ferndiagnostizieren und/oder Fernwarten umfaßt, wie nachfolgend noch näher erläutert wird.

Weitere Aspekte der Erfindung ergeben sich aus den jeweils abhängigen Ansprüchen sowie der nachfolgenden Beschreibung und den Zeichnungen.

Erfindungsgemäß werden über einen bidirektionalen Datenkanal z.B. Steuer-, Regel-, Meß-, Video- und/oder Audiodaten zwischen dem zu steuernden Gerät, und dem Kommunikationsendgerät übertragen. Dieses kann z.B. ein PC, ein tragbarer Computer, ein Telefon, ein tragbares Telefon, oder ein Kombinationsgerät aus Computer/Telefon sein. Als fernzusteuerndes Gerät kommt z.B. eine Energiemanagementanlage in Frage, und/oder Komponenten hiervon, z.B. ein Strom-, Wasser-, Fernwärme-, Öl,- oder Gaszähler, dessen Zählerstand fernabgefragt wird. Denkbar ist zum Beispiel auch ein Starkstromschalter, mit dessen Hilfe ein Elektrizitätswerk die Stromzufuhr zu einem Kunden (z.B. ein Privathaushalt oder ein Gewerbebetrieb) ferngesteuert freischalten kann - oder sperren, z.B. bei Nichtzahlen der Stromrechnung. Des weiteren kann das fernzusteuernde Gerät z.B. ein Ventil sein. Mit diesem kann z.B. ein Wasserwerk (oder z.B. ein Gaswerk) ferngesteuert die Wasserzufuhr (bzw. die Gaszufuhr) zu einem Kunden freischalten bzw. sperren. Das Freischalten/Sperren der Zufuhr kann vorzugsweise automatisiert sein. Beispielsweise kann die Zufuhr gesperrt werden, wenn das Kommunikationsendgerät und/oder der zentrale Rechner - auf Basis von von dem Zähler gelieferten Verbrauchsdaten und von Tarifdaten ermittelt, daß der von einem Haushalt/Gewerbebetrieb dem Werk geschuldete Betrag einen bestimmten Schwellwert übersteigt, die letzte Zahlung zu lange zurückliegt, etc.

Dem o.g. Zähler kann eine Anzeigevorrichtung, z.B. ein LED-Display, zugeordnet sein, die den momentanen Verbrauchsstand (z.B. auf Wochen-, Monats-, oder Jahresbasis) anzeigt. Die Anzeigevorrichtung kann z.B. auch ein Rechner mit zugeordnetem oder integriertem Bildschirm sein, z.B. ein PC oder ein Laptop, oder ein Mobiltelefon. Alternativ oder zusätzlich kann die Anzeigevorrichtung (oder eine weitere Anzeigevorrichtung) den momentanen Tarif anzeigen und/oder den sich aus Tarif und Verbrauch ergebenden, vom Haushalt/Gewerbebetrieb dem Elektrizitäts-, Wasser-, bzw. Gaswerk geschuldeten Betrag. Besonders bevorzugt erfolgt die Anpassung des Tarifs ferngesteuert vom Kommunikationsendgerät und/oder zentralen Rechner aus. Auch ist denkbar, den Zähler ferngesteuert zu kalibrieren, zu prüfen, zu warten, etc.

Allgemein kann das fernzusteuernde Gerät jedes beliebige Aggregat sein, beispielsweise auch eine Maschine oder ein Apparat einer industriellen Anlage oder eines Kraftwerks. Möglich ist z.B. auch ein Heizanlage, die ferngesteuert zwischen Sommer- und Winterbetrieb umgeschaltet wird, und/oder ferngeregelt / fernkalibriert / ferndiagnostiziert / ferngewartet wird.

Das fernzusteuernde Gerät kann z.B. auch ein Verkehrsüberwachungs- oder Gebäudeüberwachungsgerät sein, wobei ein z.B. von einem Bewegungs- und/oder Geräuschmelder ermittelter Alarm an das Kommunikationsendgerät weitergeleitet wird (Babyruf, Einbruchssicherung), und/oder eine Kamera. Des weiteren kommt als fernzusteuerndes Gerät z.B. eine (elektronische oder mechanische) Steuereinrichtung eines Kraftfahrzeugs in Frage. Diese wird - nach Identifikation z.B. des Kraftfahrzeugtyps, bzw. des Steuereinrichtungstyps durch das Kommunikationsendgerät und/oder den zentralen Rechner - aus der Ferne kalibriert, diagnostiziert, gewartet, etc. Alternativ oder zusätzlich können in Reaktion auf eine Fehlermeldung an ein weiteres, von dem Kommunikationsendgerät und/oder dem zentralen Rechner ferngesteuertes Gerät - z.B. ein tragbares Telefon, eine im Fahrzeug installierte Anzeigevorrichtung, etc. Informationen an den Kraftfahrzeugbenutzer übermittelt werden, z.B. über den Ort und den Namen der nächstgelegenen Reparaturwerkstatt. Gleichzeitig können - über ein zusätzliches ferngesteuertes Gerät - auch Informationen direkt an diese Reparaturwerkstatt gesendet werden.

Das fernzusteuernde Gerät kann z.B. auch ein Fernseher (oder ein Computer oder ein Bildschirm) sein, an den - unter Zwischenschaltung des zentralen Rechners, und des Steuergeräts - Audio- und Videodaten, insbesondere Filme übertragen werden. Vorteilhaft registriert der zentrale Rechner (oder das Kommunikationsendgerät) Abrechnungsdaten wie z.B. Tarif für den übertragenen Film, Benutzungsdauer, etc. Alternativ kann als zusätzliches (oder in den Fernseher integriertes) zu steuerndes Gerät eine Anzeigevorrichtung vorgesehen sein, welche dem Benutzer Informationen wie z.B. den momentanen Tarif, den dem Fernsehnetzbetreiber geschuldeten Betrag, etc. anzeigt.

Das mit dem fernzusteuernden Gerät gekoppelte Steuergerät kann z.B. ein herkömmlicher Personalcomputer sein, auf dem eine spezielle Software geladen ist, oder eine spezielle Box mit spezieller Hardware- und Software. Das fernzusteuernde Gerät kann z.B. mittels einer LAN-Verbindung mit dem Steuergerät gekoppelt sein, oder z.B. mittels einer Feldbusverbindung, insbesondere EIB-(Europäischer Installationsbus-) Verbindung. Im Prinzip können beliebige Bussysteme eingesetzt werden. Die Kommunikation zwischen fernzusteuerndem Gerät und Steuergerät kann beispielsweise auch drahtlos über Funk erfolgen. Vorteilhaft sind mehrere verschiedene fernzusteuernde Geräte mit dem Steuergerät gekoppelt.

Bevorzugt ist das Steuergerät - durch Laden einer entsprechenden (Basis-) Fernsteuerungsoftware - so vorkonfiguriert, daß eines (oder bevorzugt: mehrere) der vorgenannten fernzusteuernden Geräte mit dem Steuergerät gekoppelt, und in Reaktion auf von dieser Software generierte Befehle gesteuert werden können. Durch zusätzliches Laden einer oder mehrerer, mit der vorgenannten Basissoftware zusammenwirkenden (Erweiterungs-) Fernsteuerungssoftwarekomponenten kann das Steuergerät so konfiguriert werden, daß eines oder mehrere zusätzliche fernzusteuernden Geräte mit dem Steuergerät koppelbar sind. Das Steuergerät ist somit modular beliebig erweiterbar.

Die Basis- und/oder Erweiterungssoftware auf dem Steuergerät arbeitet vorzugsweise als Client mit einer entsprechenden Server-Fernsteuerungssoftware zusammen, die auf dem zentralen Rechner geladen ist. Die Server-Fernsteuerungssoftware erfüllt den überwiegenden Teil der bei der Gerätefernsteuerung anfallenden Aufgaben, z.B. Durchführen von Autorisierungskontrollen, Anwahl des zugeordneten Steuergeräts (aus einer Vielzahl möglicher Steuergeräte), etc. Die Wartung und Aktualisierung der (wesentlichen Komponenten der) Fernsteuerungssoftware kann somit unmittelbar und zentral am o.g. Rechner erfolgen. Vom zentralen Rechner aus kann (neue) Software auf das Steuergerät überspielt werden, und/oder es kann (bestehende) Software auf dem Steuergerät aktualisiert und/oder gewartet werden.

Der zentrale Rechner überprüft die Echtheit der im System gesendeten Daten, sowie deren Vollständigkeit und Korrektheit (z.B. über Paritätsbits), und veranlaßt ggf. eine Wiederholung der Datenübertragung. Jeder Vorgang wird im zentralen Rechner registriert und dokumentiert. Die genannten Funktionen Autorisierung, Echtheits-, Vollständigkeits-, Korrektheitskontrolle, Dokumentierung und Registrierung erfüllt der zentrale Rechner sowohl für vom Kommunikationsendgerät, als auch vom Steuergerät empfangene Daten.

Der Datenaustausch zwischen dem zentralen Rechner und dem Kommunikationsendgerät kann im Prinzip auf jede beliebige Weise - draht- oder drahtlos - unter Verwendung eines Internetprotokolls erfolgen.

Der zentrale Rechner konvertiert dabei das jeweils bei der Kommunikation zwischen Kommunikationsendgerät und zentralem Rechner verwendete Protokoll in das zur Kommunikation mit dem Steuergerät verwendete Protokoll, und umgekehrt. Vorzugsweise kann der zentrale Rechner über mehrere verschiedene Protokolle mit verschiedenen (diese verschiedenen Protokolle verwendenden) Endgeräten kommunizieren (z.B. TCP/IP-Protokolle, oder z.B. Windows NT-, Linux-, Unix-Rechnernetzprotokolle, oder z.B. SMSoder WAP-Handyprotokolle, etc.). Da zur Kommunikation mit dem Steuergerät immer das gleiche Protokoll verwendet wird, ist - bei Änderung gängiger Kommunikationsprotokolle auf der Bedienerseite - nur eine Anpassung im zentralen Rechner (zur Kommunikation mit dem Endgerät), nicht aber im Steuergerät nötig.

Erfindungsgemäß erfolgt die Kommunikation zwischen zentralem Rechner und Kommunikationsendgerät unter Verwendung von Internetprotokollen, insbesondere gemäß dem sog. Transmission Protocol (TCP) und dem sog. Internet Protocol (IP), kurz TCP/IP. Hierzu ist auf dem jeweiligen Gerät bzw. Rechner zur Anbindung an das Internet eine Software geladen, die das TCP/IP Protokoll verstehen und auswerten kann (Socket oder TCP/IP Stack). Bevorzugt ist der zentrale Rechner ein ständig mit dem Internet verbundener Host-Rechner, während das Kommunikationsendgerät nur bei Bedarf mit dem Internet verbunden wird. Bevorzugt ist das Steuergerät vorteilhaft so ausgestaltet, daß es den So-Bus einer ISDN/Funkverbindung durchschleift. Im Meldungs- oder Ansprechfall wird das Steuergerät selbständig hochgefahren, der So-Bus von anderen Telekommunikationsgeräten getrennt, und die Verbindung über den D-Kanal freigeschaltet.

Das Steuergerät weist vorzugsweise einen oder mehrere, verschiedene Stromversorgungsanschlüsse auf, die z.B. für verschiedene Spannungshöhen und/oder für Gleich- und/oder Wechselspannungen konfiguriert sind. Dasselbe Steuergerät ist somit universell (Boot, Auto, Haus, etc.) einsetzbar.

Im folgenden wird die Erfindung anhand eines Ausführungsbeispiels und der beiliegenden Zeichnung näher erläutert.

In der Zeichnung zeigt:

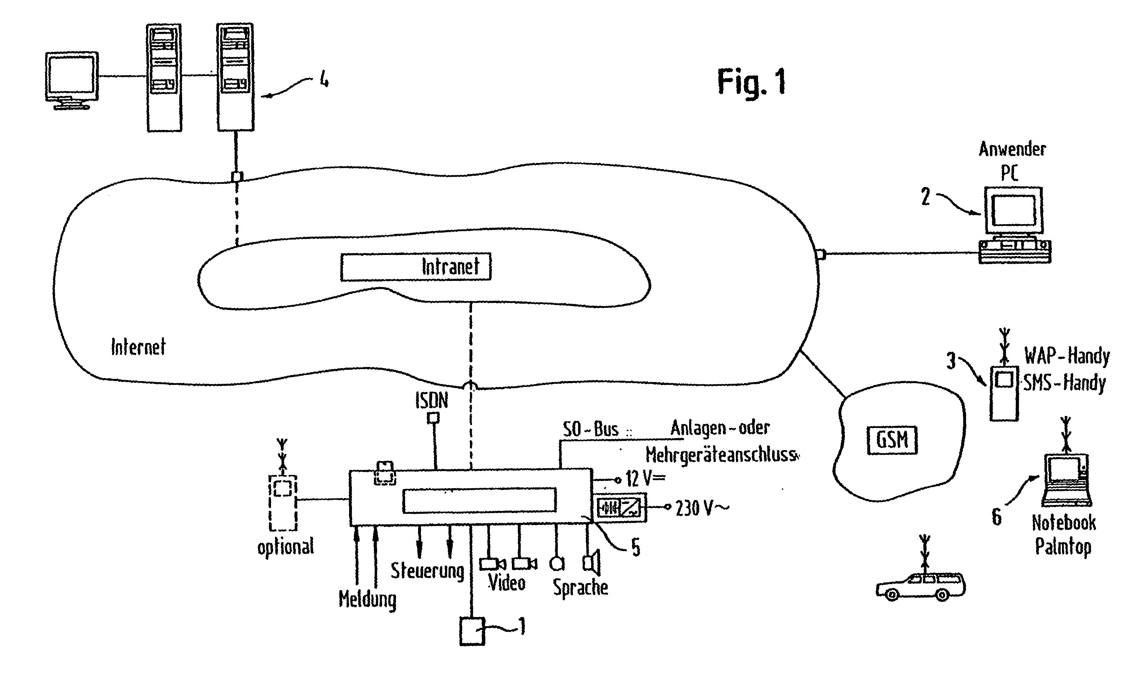

- Fig. 1: eine schematische Darstellung eines erfindungsgemäßen Fernsteuersystems.

Gemäß Fig. 1 weist ein erfindungsgemäßes Fernsteuersystem einen zentralen Rechner 4, und ein Steuergerät 5 auf. Der zentrale Rechner 4 ist im Ausführungsbeispiel ständig mit dem Internet verbunden. Er kann - z.B. durch Eingabe von dessen URL- (Universal Resource Locator-) Adresse von beliebigen, mit dem Internet verbindbaren Kommunikationsendgeräten aus angewählt werden. Als Beispiele für Kommunikationsendgeräte sind in Fig. 1 ein Personalcomputer 2, ein tragbarer Computer oder Taschencomputer 6, und ein Mobiltelefon 3 gezeigt. Das Mobiltelefon 3 kann z.B. ein WAP- und/oder SMS-Handy sein. Der zentrale Rechner kann dann alternativ z.B. auch dadurch angewählt werden, indem eine SMS an diesen geschickt wird.

In Reaktion auf den Aufbau einer Internetverbindung zwischen dem jeweiligen Kommunikationsendgerät und dem zentralen Rechner 4 führt dieser über eine am Kommunikationsendgerät dargestellte Steueroberfläche, z.B. eine Internetseite, eine generelle Zugriffsberechtigungsprüfung durch, z.B. mit Hilfe eines vom Benutzer des Kommunikationsendgeräts einzugebenden Paßworts, und/oder einer Endgeräte-Identifikationsnummer, etc. Als nächstes wird eine weitere Zugriffsberechtigungsprüfung durchgeführt, z.B. in Bezug auf die spezielle, bei der jeweiligen Anwahl betroffene Datenbank des zentralen Rechners 4.

Das Steuergerät 5 erfüllt mehrere Teilfunktionen, steuert z.B. mehrere, verschiedene Geräte. Die weitere Zugriffsberechtigungsprüfung durch den zentralen Rechner 4 erfolgt z.B. im Hinblick auf eine konkrete, momentan vom Steuergerät 5 zu erfüllende Funktion (unter den mehreren möglichen, vom Steuergerät 5 erfüllbaren Funktionen), z.B. im Hinblick auf ein momentan betroffenes fernzusteuerndes Gerät (von mehreren möglichen, mit dem Steuergerät 5 verbundenen, fernzusteuernden Geräten). Jeder Benutzer ist somit nur für bestimmte Steuergeräte und/oder für bestimmte Teilfunktionen dieser Steuergeräte zugriffsberechtigt.

Nach erfolgter Autorisierung baut der zentrale Rechner 4 eine Verbindung zu dem Steuergerät 5 auf. Hierzu wählt der zentrale Rechner 4 zunächst - unter einer Vielzahl von Steuergeräten - das für die jeweilige Verbindung vorgesehene Steuergerät 5 aus. Beispielsweise kann einem bestimmten Benutzer oder einem bestimmten Kommunikationsendgerät stets ein einziges, vorbestimmtes Steuergerät zugeordnet sein. Die Identifizierung des Steuergeräts 5 erfolgt dann z.B. über das o.g. benutzerspezifische Paßwort, oder z.B. die o.g. Endgeräte-Identifikationsnummer, oder die Telefonnummer des Endgeräts. Alternativ kann der Benutzer eines von mehreren vorbestimmten, ihm zugeordneten Steuergeräten auswählen (wobei er i.a. für jedes dieser Steuergeräte nur Zugriffsberechtigung für bestimmte Teilfunktionen hat, siehe oben). Die Identifizierung des Steuergeräts erfolgt dann dadurch, daß der Benutzer das gewünschte Steuergerät charakterisierende Daten an den zentralen Rechner 4 überträgt, z.B. ein steuergerätspezifisches Paßwort, die Steuergerät-Kennummer oder z.B. die Telefonnummer, unter der das Steuergerät 5 angewählt werden kann.

An das so bestimmte Steuergerät 5 sendet der zentrale Rechner 4 ein Rufsignal, indem er die Telefonnummer eines diesem Steuergerät 5 zugeordneten Telefonanschlusses wählt, d.h. die diesem Telefonanschluß entsprechenden Telefonverbindungs-Wahlzeichen. Bei dem Telefonanschluß kann es sich um einen Festnetz-, insbesondere ISDN-Anschluß, oder optional um einen Mobilfunknetzanschluß (in der Zeichnung gestrichelt dargestellt) handeln.

Der So-Bus des ISDN/Funkverbindungsanschlusses ist durch das Steuergerät 5 durchgeschleift. Wird - z.B. anhand der mit übertragenen Telefonnummer des dem zentralen Rechner 4 zugeordneten Telefonanschlusses - ermittelt, daß eine Anfrage vom zentralen Rechner 4 vorliegt, wird der Bus von anderen Telekommunikationsgeräten getrennt, und über den D-Kanal die Verbindung zum Rechner 4 freigeschaltet.

Daraufhin wird das Steuergerät 5 von einem Bereitschaftsmodus (Standby), bei dem nur wenig Strom verbraucht wird, in einen Arbeitsmodus hochgefahren, bei welchem der Stromverbrauch höher ist. Bei einem alternativen Ausführungsbeispiel ist das Steuergerät 5 zunächst ausgeschaltet, und wird in Reaktion auf die Anfrage durch den zentralen Rechner 4 eingeschaltet. Das Steuergerät 5 weist zwei Stromversorgungsanschlüsse (12 V Gleichstrom und 230 V Wechselstrom) auf. Sie ist somit universell (Boot, Auto, Haus) einsetzbar.

In Reaktion auf den Aufbau einer Intranetverbindung zwischen dem Steuergerät 5 und dem zentralen Rechner 4 führt dieser eine Zugriffsberechtigungsprüfung für das Steuergerät 5 durch,
z.B. mit Hilfe der o.g., im Steuergerät 5 gespeicherten Steuergerät-Kennummer, oder zusätzlich im Hinblick auf eine konkrete, momentan vom Steuergerät 5 zu erfüllende Funktion (unter mehreren möglichen, vom Steuergerät 5 erfüllbaren Funktionen), z.B. für ein momentan betroffenes fernzusteuerndes Gerät (von mehreren möglichen fernzusteuernden Geräten).

Hierauf können vom Steuergerät 5 ausgegebene Daten - nach Zwischenspeicherung im zentralen Rechner 4 - an das Kommunikationsendgerät übermittelt werden. Abhängig vom jeweiligen Steuergerät, und/oder von der momentan vom Steuergerät erfüllten Funktion kann der zentrale Rechner 4 die Daten an ein oder mehrere vorbestimmte Endgeräte übermitteln. Die für ein jeweiliges Steuergerät und/oder eine jeweilige Teilfunktion eines jeweiligen Steuergeräts vorgesehenen Endgeräte sind im zentralen Rechner 4 gespeichert. Diese Zuordnung zwischen Steuergerät/Steuergerätteilfunktion und Kommunikationsendgerät kann - sofern eine entsprechende Zugriffsberechtigung vorliegt - von einem Benutzer von einem Kommunikationsendgerät aus geändert werden.

Bei den Daten kann es sich z.B. um Steuer-, Regel-, Meß-, Video- und/oder Audiodaten handeln. Auf entsprechende Weise werden Daten, die der Benutzer über die o.g. am Kommunikationsendgerät dargestellte Steueroberfläche, z.B. die Internetseite, eingibt - unter Zwischenspeicherung im zentralen Rechner - an das Steuergerät 5 übertragen. Des weiteren ist es mit einem EIB (Europäischer Installationsbus) verbunden (hier nicht dargestellt), und setzt die vom zentralen Rechner 4 empfangenen Signale in entsprechende EIB-Daten- und Steuersignale um. Am EIB sind als fernzusteuernde Geräte ein Stromzähler 1, sowie zwei Kameras, ein Mikrofon und ein Lautsprecher angeschlossen.

Von diesen generierte Daten werden über den EIB zum Steuergerät 5 übertragen, von diesem z.B. ins TCP/IP-Protokoll umgesetzt, und zum zentralen Rechner 4 übertragen.

Bei einem weiteren, hier nicht dargestellten Ausführungsbeispiel weist das Steuergerät 5 zusätzlich noch einen A/D- (Analog/Digital-) Wandler auf. Dieser ist über eine analoge, bidirektionale Datenverbindung gleichzeitig mit mehreren zu steuernden Geräten verbunden, z.B. mit Haushalts-Elektrogeräten wie z.B. Kühlschrank, Herd, Waschmaschine, etc. Die vom A/D-Wandler ausgegebenen Digitaldaten werden im Steuergerät entsprechend wie oben im Hinblick auf EIB-Daten erläutert verarbeitet, sodaß die über die Analog-Datenverbindung angeschlossenen Geräte von einem Kommunikationsendgerät aus ferngesteuert werden können.

## Patentansprüche

1. Verfahren zum Fernsteuern von einem oder mehreren Geräten (1), wobei:
a) das/die fernsteuerbare(n) Gerät(e) (1) an ein Steuergerät (5) angekoppelt wird/werden,
**dadurch gekennzeichnet, daß**
b) eine Vielzahl von Steuergeräten (5) über ein Intranet und/oder eine Telefonverbindung mit einem zentralen Rechner (4) verbunden wird,
c) auf den zentralen Rechner (4) anderseits über ein öffentlich zugängliches Netz unter Verwendung eines Internetprotokolls von mindestens einem geographisch entfernten Kommunikationsendgerät (2; 3; 6) zur Durchführung der Fernsteuerung zugegriffen wird,
d) der zentrale Rechner (4) mehreren Benutzern mit unterschiedlichen Zugriffsberechtigungen zugeordnet wird, und
e) der zentrale Rechner (4) eine Zugriffsberechtigungsprüfung vornimmt und je nach erfolgter Autorisierung den Zugriff des Kommunikationsendgeräts (2; 3; 6) zu einem Steuergerät (5) und/oder einer Teilfunktion eines Steuergeräts (5) vermittelt und dabei ein bei der Kommunikation mit dem Kommunikationsendgerät (2; 3; 6) verwendetes Übertragungsprotokoll in ein zur Kommunikation mit dem Steuergerät (5) verwendetes Übertragungsprotokoll konvertiert und umgekehrt.

2. Verfahren nach Anspruch 1, **dadurch gekennzeichnet, daß** der zentrale Rechner (4) die Funktionen Autorisierung, Echtheits-, Vollständigkeits-, Korrektheitskontrolle, Dokumentierung und Registrierung der Datenübertragung sowohl für vom Kommunikationsendgerät (2; 3; 6) als auch vom Steuergerät (5) empfangene Daten ausführt.

3. Verfahren nach einem der vorhergehenden Ansprüche, **dadurch gekennzeichnet, daß** auf dem zentralen Rechner (4) eine Steuerungssoftware betrieben wird, mit welcher die Fernsteuerung des Geräts (1) bewirkt wird.

4. Verfahren nach Anspruch 3, dadurch gekenntzeichnet, daß auf dem zentralen Rechner (4) die Serverkomponente einer Client-Server-Steuerungssoftware betrieben wird.

5. Verfahren nach Anspruch 3, **dadurch gekennzeichnet, daß** auf dem Steuergerät (5) die Client-Komponente der Client-Server-Steuerungssoftware betrieben wird, welche zusammen mit der auf dem zentralen Rechner geladenen Serverkomponente die Fernsteuerung des Geräts bewirkt.

6. Verfahren nach einem der vorhergehenden Ansprüche, **dadurch gekennzeichnet, daß** der Datenaustausch zwischen dem zentralen Rechner (4) und einem Steuergerät (5) unter Verwendung eines Internetprotokolls erfolgt.

7. Verfahren nach einem der vorhergehenden Ansprüche, wobei das fernzusteuernde Gerät (1) ein Strom-, Wasser-, Öl- oder Gaszähler ist.

8. Verfahren nach einem der Ansprüche 1-7, wobei das fernzusteuernde Gerät (1) ein Verkehrsüberwachungs- oder Gebäudeüberwachungsgerät ist.

9. Verfahren nach einem der Ansprüche 1-7, wobei das fernzusteuernde Gerät (1) eine elektronische oder mechanische Steuereinrichtung eines Kraftfahrzeugs ist.

10. Verfahren nach einem der Ansprüche 1-7, wobei das fernzusteuernde Gerät (1) ein Fernseher, Bildschirm oder Computer ist, an den Audiound Videodaten übertragen werden.

11. Verfahren nach einem der vorhergehenden Ansprüche, **dadurch gekennzeichnet, daß** das fernzusteuernde Gerät (1) mittels einer LAN-Verbindung mit dem Steuergerät (5) gekoppelt wird.

12. Verfahren nach einem der vorhergehenden Ansprüche, **dadurch gekennzeichnet, daß** das fernzusteuernde Gerät (1) mittels einer Feldbusverbindung mit dem Steuergerät (5) gekoppelt wird.

13. Fernsteuersystem zur Fernsteuerung von einem oder mehreren Geräten (1), bei welchem:
a) das/die fernsteuerbare(n) Gerät(e) (1) an ein Steuergerät (5) angekoppelt ist/sind,
**dadurch gekennzeichnet, daß**
b) eine Vielzahl von Steuergeräten (5) über ein Intranet und/oder eine Telefonverbindung mit einem zentralen Rechner (4) verbunden ist,
c) der zentrale Rechner (4) anderseits über ein öffentlich zugängliches Netz unter Verwendung eines Internetprotokolls von mindestens einem geographisch entfernten Kommunikationsendgerät (2; 3; 6) zur Durchführung der Fernsteuerung erreichbar ist,
d) der zentrale Rechner (4) mehreren Benutzern mit unterschiedlichen Zugriffsberechtigungen zugeordnet ist, und
e) der zentrale Rechner (4) derart angeordnet und ausgebildet ist, daß er eine Zugriffsberechtigungsprüfung vornimmt und je nach erfolgter Autorisierung den Zugriff des Kommunikationsendgeräts (2; 3; 6) zu einem Steuergerät (5) und/oder zu einer Teilfunktion eines Steuergeräts (5) vermittelt und dabei ein bei der Kommunikation mit dem Kommunikationsendgerät (2; 3; 6) verwendete Übertragungsprotokoll in ein zur Kommunikation mit dem Steuergerät (5) verwendete Übertragungsprotokoll konvertiert und umgekehrt.

14. Fernsteuersystem nach Anspruch 13, **dadurch gekennzeichnet, daß** der zentrale Rechner (4) derart angeordnet und ausgebildet ist, daß er die Funktionen Autorisierung, Echtheits-, Vollständigkeits-, Korrektheitskontrolle, Dokumentierung und Registrierung der Datenübertragung sowohl für vom Kommunikationsendgerät als auch vom Steuergerät (5) empfangene Daten ausführt.

## Claims

1. A method for the remote control of one or more appliances (1), whereby:
a) the remote-controlled appliance(s) (1) is/are coupled to a control device (5),
**characterised in that**
b) a plurality of control devices (5) is connected via an Intranet or telephone connection to a central computer (4),
c) access to the central computer (4) is achieved on the other hand via a publicly accessible network by using an Internet protocol of at least one geographically remote communications transmit equipment (2; 3; 6) for the performance of the remote control,
d) the central computer (4) is assigned to several users having different access authorisations, and
e) the central computer (4) performs an access authorisation check and after authorisation has been given switches the access of the communications transmit equipment (2; 3; 6) to a control device (5) and/or a sub-function of a control device (5) and in so doing converts a communications protocol used during communication with the communications transmit equipment (2; 3; 6) into a communications protocol used for communication with the control device (5) and vice versa.

2. A method according to Claim 1,
**characterised in that** the central computer (4) performs the functions authorisation, authenticity check, completeness check, correctness check, documentation and registration of the data transmission for data received from the communication transmit equipment (2; 3; 6) and also from the control device (5).

3. A method according to one of the preceding Claims,
**characterised in that** at the central computer (4) control software is operated, with which the remote control of the appliance (1) is effected.

4. A method according to Claim 3,
**characterised in that** at the central computer (4) the server component of client server control software is operated.

5. A method according to Claim 3,
**characterised in that** at the control device (5) the client component of the client server control software is operated, which together with the server component loaded on the central computer effects the remote control of the appliance.

6. A method according to one of the preceding Claims,
**characterised in that** the exchange of data between the central computer (4) and a control device (5) takes place by using an Internet protocol.

7. A method according to one of the preceding Claims, whereby the appliance (1) to be remote controlled is an electricity, water, oil or gas meter.

8. A method according to one of Claims 1-7, whereby the appliance to be remote controlled (1) is a traffic monitoring or building monitoring device.

9. A method according to one of Claims 1-7, whereby the appliance to be remote controlled (1) is an electronic or a mechanical control mechanism of a motor vehicle.

10. A method according to one of Claims 1-7, whereby the appliance (1) to be remote controlled is a television set, display terminal or computer, to which audio and video data are transmitted.

11. A method according to one of the preceding Claims,
**characterised in that** the appliance (1) to be remote controlled is coupled by means of a LAN connection to the control device (5).

12. A method according to one of the preceding Claims,
**characterised in that** the appliance (1) to be remote controlled is coupled by means of a field bus connection to the control device (5).

13. A remote control system for the remote control of one or more appliances (1), in which:
a) the appliance(s) to be remote controlled (1) is/are coupled to a control device (5)
**characterised in that**
b) a plurality of control devices (5) is connected via an Intranet and/or a telephone connection to a central computer (4),
c) the central computer (4) on the other hand can be reached via a publicly accessible network by using an Internet protocol of at least one geographically remote communication transmit equipment (2; 3; 6) for the performance of the remote control,
d) the central computer (4) is assigned to several users with different access authorisations, and
e) the central computer (4) is disposed and constructed in such a manner that it performs an access authorisation check and after authorisation has been given switches access of the communications transmit equipment (2; 3; 6) to a control device (5) and/or to a sub-function of a control device (5) and at the same time converts a communications protocol used during communication with the communications transmit equipment (2; 3; 6) into a communications protocol used for communication with the control device (5) and vice versa.

14. A remote control device according to Claim 13,
**characterised in that** the central computer (4) is disposed and constructed in such a manner that it performs the functions authorisation, authenticity check, completeness check, correctness check, documentation and registration of the data transmission for data received from the communications transmit equipment and also from the control device (5).

## Revendications

1. Procédé de télécommande d'un ou de plusieurs appareils (1),
a) l'appareil ou les appareils (1) télécommandés étant raccordés à une unité de commande (5),
**caractérisé en ce que**
b) une multitude d'unités de commande (5) sont raccordées à un processeur central (4) par l'intermédiaire d'un Intranet et/ou d'une ligne téléphonique,
c) par ailleurs, pour effectuer la télécommande, un accès est prévu sur le processeur central (4) par l'intermédiaire d'un réseau publiquement accessible en utilisant un protocole Internet depuis au moins un terminal de communication (2, 3, 6) isolé géographiquement,
d) le processeur central (4) est alloué à plusieurs utilisateurs disposant de différents droits d'accès,
e) le processeur central (4) effectue un contrôle du droit d'accès et, selon l'autorisation accordée, commute l'accès du terminal de communication (2, 3, 6) sur une unité de commande (5) et/ou sur une fonction partielle d'une unité de commande (5), ledit processeur central convertissant alors un protocole de transmission utilisé pour la communication avec le terminal de communication (2, 3, 6) en un protocole de transmission utilisé pour la communication avec l'unité de commande (5), et inversement.

2. Procédé selon la revendication 1, **caractérisé en ce que** le processeur central (4) exécute les fonctions autorisation, vérification de l'authenticité, de l'intégrité, de l'exactitude, documentation et enregistrement de la transmission des données, pour des données reçues à la fois par le terminal de communication (2, 3, 6) et également par l'unité de commande (5).

3. Procédé selon l'une quelconque des revendications précédentes, **caractérisé en ce qu'**un logiciel de commande est exploité sur le processeur central (4), ledit logiciel opérant la télécommande de l'appareil (1).

4. Procédé selon la revendication 3, **caractérisé en ce que** le composant serveur d'un logiciel de contrôle client-serveur est exploité sur le processeur central (4).

5. Procédé selon la revendication 3, **caractérisé en ce que** le composant client du logiciel de contrôle client-serveur est exploité sur l'unité de commande (5), ledit logiciel opérant la télécommande de l'appareil conjointement avec le composant serveur chargé sur le processeur central.

6. Procédé selon l'une quelconque des revendications précédentes, **caractérisé en ce que** l'échange des données entre le processeur central (4) et une unité de commande (5) a lieu en utilisant un protocole Internet.

7. Procédé selon l'une quelconque des revendications précédentes, l'appareil (1) à télécommander étant un compteur de courant, un compteur d'eau, un compteur d'huile ou un compteur à gaz.

8. Procédé selon l'une quelconque des revendications 1-7, l'appareil (1) à télécommander étant un appareil de surveillance de la circulation ou un appareil de surveillance de bâtiments.

9. Procédé selon l'une quelconque des revendications 1-7, l'appareil (1) à télécommander étant un dispositif de commande électronique ou mécanique d'un véhicule à moteur.

10. Procédé selon l'une quelconque des revendications 1-7, l'appareil (1) à télécommander étant un récepteur de télévision, un écran ou un ordinateur auquel sont transmises des données audio et vidéo.

11. Procédé selon l'une quelconque des revendications précédentes, **caractérisé en ce que** l'appareil (1) à télécommander est connecté à l'unité de commande (5) au moyen d'une liaison LAN.

12. Procédé selon l'une quelconque des revendications précédentes, **caractérisé en ce que** l'appareil (1) à télécommander est connecté à l'unité de commande (5) au moyen d'une liaison par bus de champ.

13. Système de télécommande d'un ou de plusieurs appareils (1),
a) l'appareil ou les appareils (1) devant être télécommandés étant raccordé(s) à une unité de commande (5),
**caractérisé en ce que**
b) une multitude d'unités de commande (5) sont raccordées à un processeur central (4) par l'intermédiaire d'un Intranet et/ou d'une ligne téléphonique,
c) par ailleurs, pour effectuer la télécommande, le processeur central (4) est accessible par l'intermédiaire d'un réseau publiquement accessible en utilisant un protocole Internet depuis au moins un terminal de communication (2, 3, 6) isolé géographiquement,
d) le processeur central (4) est alloué à plusieurs utilisateurs disposant de différents droits d'accès,
e) le processeur central (4) est agencé et configuré de telle sorte qu'il effectue un contrôle du droit d'accès et, selon l'autorisation accordée, commute l'accès du terminal de communication (2, 3, 6) sur une unité de commande (5) et/ou sur une fonction partielle d'une unité de commande (5), ledit processeur central convertissant alors un protocole de transmission utilisé pour la communication avec le terminal de communication (2, 3, 6) en un protocole de transmission utilisé pour la communication avec l'unité de commande (5), et inversement.

14. Système de télécommande selon la revendication 13, **caractérisé en ce que** le processeur central (4) est agencé et configuré de telle sorte qu'il exécute les fonctions autorisation, vérification de l'authenticité, de l'intégrité, de l'exactitude, documentation et enregistrement de la transmission des données, pour des données reçues à la fois par le terminal de communication et également par l'unité de commande (5).
